# EUROPÄISCHE PATENTSCHRIFT

(11) **EP 1 057 987 B1**
(45) Veröffentlichungstag und Bekanntmachung des Hinweises auf die Patenterteilung: **30.06.2004**
(21) Anmeldenummer: 00110578.2
(22) Anmeldetag: 18.05.2000
(51) Int. Cl.: F02C 7/264

(54) **Zündeinrichtung für eine Gasturbinenbrennkammer**
Ignition device for a gas turbine combustor
Dispositif d'allumage pour une chambre de combustion d'une turbine à gaz

(30) Priorität: 02.06.1999 DE 19925328
(43) Veröffentlichungstag der Anmeldung: 06.12.2000
(73) Patentinhaber: Alstom, 75116 Paris (FR)
(72) Erfinder: Beelmann, Ung-Lap Ngo, Dr.-Ing., 76199 Karlsruhe (DE); Renner, Mark, Dipl.Ing., 68163 Mannheim (DE); Schlundt, Jens, Dipl.-Ing., 68549 Ilvesheim (DE); Heintz, Gerolf, Dipl.-Ing., 64584 Biebesheim (DE); Leonhard, Mario, 64646 Heppenheim (DE); Wahlig, Ludwig, 68642 Bürstadt (DE); Behnke, Klaus, Dipl.-Ing., 69168 Schriesheim (DE); Witt, Michael, Dipl.-Ing., 68219 Mannheim (DE); Bohtz, Christian, Dipl.-Ing., Geroldswil 8954 (CH); Molsen, Jens, Dipl.-Ing., 69469 Weinheim (DE); Schmidt, Reinhold, Dipl.-Ing., 79761 Waldshut-Tiengen (DE)
(74) Vertreter: Dreiss, Fuhlendorf, Steimle & Becker

(56) Entgegenhaltungen:
- EP-A- 0 728 989
- DE-U- 7 524 019
- GB-A- 910 527
- US-A- 4 215 979
- US-A- 5 000 159
- US-A- 5 491 972

## Beschreibung

Die Erfindung betrifft eine Einrichtung zum Zünden der Verbrennung in einer Brennkammer einer Gasturbine nach dem Oberbegriff des Anspruchs 1.

Dokument US 4 215 979 offenbart eine Einrichtung zum Zünden der Verbrennung in einer Brennkammer einer Gas Turbine nach dem Stand der Technik.

Eine weitere Einrichtung ist aus der DE 43 20 429 A1 bekannt. Dort hat die als Zündleiter dienende Gasleitung direkten Kontakt zur Zündluft. Diese muß daher absolut trocken und ölfrei sein, was in der Regel schwer zu realisieren ist. Die Isolation ist partiell mit Keramikstiften ausgeführt, die unter Spannung, z. B. bei der Montage, oder bei Pulsationen während des Betriebes, leicht zerbricht und damit Funkenüberschläge in der auch als Zündfackel bezeichneten Einrichtung hervorruft.

Es stellt sich die Aufgabe eine Einrichtung der eingangs genannten Art anzugeben, die einen Kontakt des Zündleiters zur Zündluft und Ausfälle aufgrund von Schäden an der Keramik vermeidet, sowie insgesamt die Zündqualität verbessert.

Gelöst wird diese Aufgabe erfindungsgemäß durch die im Anspruch 1 angegebenen Merkmale.

Danach verlaufen der Zündleiter und die Gasleitung innerhalb des Gehäuses parallel zueinander. Der Zündleiter ist von einer Schutzhülse umgeben, wobei ein Ringraum zwischen Zündleiter und Schutzhülse mit gegenüber dem Zündleiter und/oder der Schutzhülse festgelegter Keramik ausgefüllt ist und wobei an dem in das Kopfstück ragenden Ende der Schutzhülse eine als Zündelektrode dienende ringförmige Scheibe angebracht ist.

Damit ist der Zündleiter mit der Keramik ummantelt und zum Beispiel durch Kleben festgelegt. Sollte die Keramik brechen, führt das zu keiner Einschränkung der Funktionalität. Zerbrochene Keramikstücke können nicht in die Brennkammer fallen, da die als Zündelektrode dienende Scheibe dies verhindert. Der Zündleiter wird von der Zündluft vollständig isoliert, daher werden an die Zündluft geringere Qualitätsanforderungen gestellt, was zu einer zusätzlichen Kostenreduktion bei der Zündluftaufbereitung beiträgt.

Die Gasleitung und die Schutzhülse weisen mehrere als Gleitscheiben ausgebildete Abstandshalter auf. Zumindest ein Teil der Gleitscheiben ist starr mit der Gasleitung und/oder der Schutzhülse verbunden. Die Schutzhülse ist mit dem Zündkopf ebenfalls starr verbunden, während der Zündkopf relativ zum Kopfstück verschiebbar ausgebildet ist.

Da die starre Verbindung der inneren Teile der Einrichtung durch Schweißen beziehungsweise Hartlöten erzielt wird, ist ein Lösen aufgrund von Vibrationen ausgeschlossen. Relevante Teile sind so ausgebildet, daß zur Kompensierung von Wärmedehnungen eine Relativverschiebung möglich ist.

Durch die Verlegung eines Thermoelementes in den Innenraum des Kopfstückes kann die Zündflamme immer und sofort delektiert werden. Auch eine Überwachung des Ausfalls einer Zündfackel ist durch diese Maßnahme möglich.

Anhand eines Ausführungsbeispieles und einer schematischen Zeichnung wird ein Ausführungsbeispiel einer erfindungsgemäßen Einrichtung beschrieben.

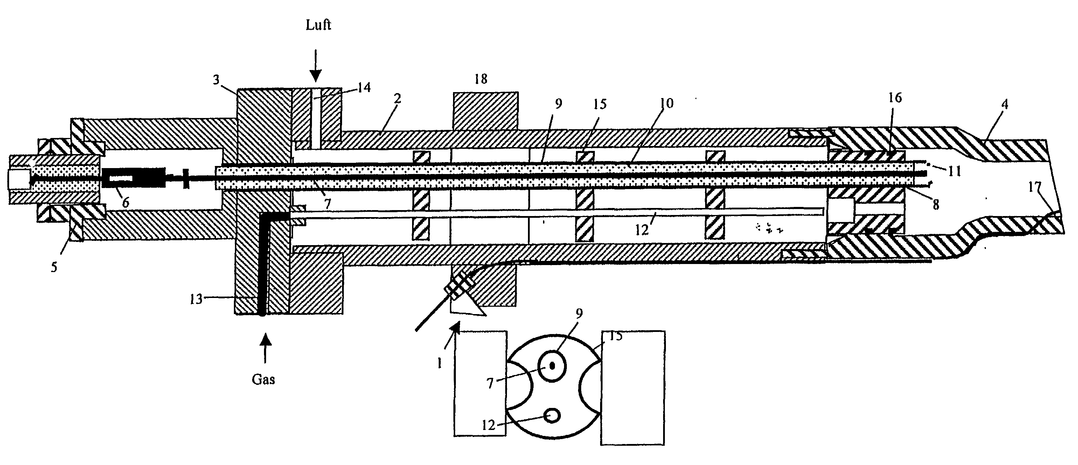

Die einzige Figur zeigt eine Einrichtung 1 zum Zünden der Verbrennung in einer nicht dargestellten Brennkammer einer ebenfalls nicht dargestellten Gasturbine. Diese auch als Zündfackel bezeichnete Einrichtung besteht aus einem Gehäuse 2, da von einem Endstück 3 verschlossen ist. An seinem dem Endstück abgewandten Ende weist das Gehäuse 2 ein Kopfstück 4 auf. Von einer in das Endstück 3 eingeschweißten Zündkerze 5 erstreckt sich ein Aufnehmer 6 in den ein Zündleiter 7 ragt. Der Zündleiter ist relativ zum Aufnehmer 6 in Achsrichtung bewegbar. Konzentrisch zum Zündleiter 7 erstreckt sich vom Endstück 3 zu einem Zündkopf 8 eine Schutzhülse 9, die gegenüber dem Zündkopf 8 verschweißt oder verlötet ist. Ein somit gebildeter Ringraum 10 zwischen Zündleiter und Schutzhülse ist mit Keramik ausgefüllt. Die Keramikfüllung ist durch Kleben mit dem Zündleiter 7 und/oder der Schutzhülse 9 verbunden. Eine ringförmige Scheibe 11, die den Ringraum 10 im Bereich des Kopfstückes 4 begrenzt, dient zusammen mit dem Zündleiter 7 als Zündelektrode. Die Scheibe 11 verhindert zusätzlich den Verlust von Keramikbruchstücken in Richtung der nicht dargestellten Brennkammer.

Parallel zur Schutzhülse 9 verläuft durch das Gehäuse 2 eine Gasleitung 12, die in dem Zündkopf 8 endet. Die Zufuhr des Gases erfolgt durch eine in das Endstück 3 eingebrachte Bohrung 13. Die Zufuhr von Verbrennungsluft erfolgt über eine im Gehäuse 2 vorgesehene Öffnung 14, die durch die Schutzhülse 9 vom Zündleiter 7 ferngehalten wird.

Mehrere als Gleitscheiben 15 ausgebildete Abstandshalter sind mit der Gasleitung 12 durch Hartlöten oder Schweißen verbunden. Die dem Zündkopf 8 nebengeordnete Gleitscheibe 15 ist mit der Schutzhülse 9 verschweißt, während die restlichen Gleitscheiben zur Kompensierung von Wärmedehnungen keine Verbindungen mit der Schutzhülse 9 eingehen. Zwischen dem Zündkopf 8 und dem Kopfstück 4 ist eine Abdichtung mit Rundschnurringen 16 vorgesehen, die eine Relativbewegung erlauben. Zwischen der Außenumfangsfläche der Gleitscheiben 15 und der Innenumfangsfläche des Gehäuses 2 besteht ein Spiel, um ebenfalls eine Relativbewegung in Längsrichtung zu gestatten.

## Patentansprüche

1. Einrichtung zum Zünden der Verbrennung in einer Brennkammer einer Gasturbine mit einem ein Endstück (3) und ein Kopfstück (4) aufweisendem Gehäuse (2), mit einem zwischen Endstück und Kopfstück erstreckten Zündleiter (7) sowie einer im Endstück angeordneten Zündkerze (5), mit einer zu einem Zündkopf (8) führenden Gasleitung (12) und mit einer in den Gehäuseinnenraum führenden Luftzuleitung, wobei der Zündleiter (7) und die Gasleitung (12) innerhalb des Gehäuses (2) parallel zueinander verlaufen und der Zündleiter von einer Schutzhülse (9) umgeben ist **dadurch gekennzeichnet daß** ein Ringraum (10) zwischen Zündleiter und Schutzhülse mit gegenüber dem Zündleiter und/oder der Schutzhülse festlegbaren Keramik ausgefüllt ist und daß an dem in das Kopfstück (4) ragenden Ende der Schutzhülse (9) eine als Zündelektrode dienende ringförmige Scheibe (11) angebracht ist.

2. Einrichtung nach Anspruch 1, **dadurch gekennzeichnet, daß** die Keramikfüllung mit dem Zündleiter (7) und/oder der Schutzhülse (9) verklebt ist.

3. Einrichtung nach Anspruch 1, **dadurch gekennzeichnet, daß** die Gasleitung (12) und die Schutzhülse (9) mehrere als Gleitscheiben (15) ausgebildete Abstandshalter aufweisen, daß zumindest ein Teil der Gleitscheiben starr mit der Gasleitung und/oder der Schutzhülse verbunden ist, daß die Schutzhülse mit dem Zündkopf (8) ebenfalls starr verbunden ist und daß der Zündkopf relativ zum Kopfstück (4) verschiebbar ausgebildet ist.

4. Einrichtung nach Anspruch 1, **dadurch gekennzeichnet, daß** das der Zündkerze (5) zugewandte Ende des Zündleiters (7) in einen Aufnehmer (6) der Zündkerze (5) ragt und daß der Zündleiter (7) in achsialer Richtung relativ zum Aufnehmer bewegbar ist.

5. Einrichtung nach Anspruch 1, **dadurch gekennzeichnet, daß** ein Thermoelement (17) ein vorgebbares Maß in den Innenraum des Kopfstückes (4) ragt.

## Claims

1. Device for igniting the combustion in a combustion chamber of a gas turbine, comprising a housing (2) having an end piece (3) and a head piece (4), an ignition conductor (7) extending between the end piece and the head piece and a spark plug (5) disposed in the end piece, a gas conduit (12) leading to an ignition head (8), and an air feed line leading to the interior of the housing, the ignition conductor (7) and the gas conduit (12) running parallel to one another within the housing (2) and the ignition conductor being surrounded by a protective sleeve (9), **characterised in that** an annular space (10) between the ignition conductor and the protective sleeve is filled with ceramic material which can be fixed with respect to the ignition conductor and/or the protective sleeve, and **in that** an annular disc (11) serving as an ignition electrode is mounted on the end of the protective sleeve (9) projecting into the head piece (4).

2. Device according to claim 1, **characterised in that** the ceramic material filling is bonded adhesively to the ignition conductor (7) and/or the protective sleeve (9).

3. Device according to claim 1, **characterised in that** the gas conduit (12) and the protective sleeve (9) comprise a plurality of spacers configured as sliding discs (15), **in that** at least some of the sliding discs are connected rigidly to the gas conduit and/or the protective sleeve, **in that** the protective sleeve is also connected rigidly to the ignition head (8), and **in that** the ignition head is configured to be displaceable relative to the head piece (4).

4. Device according to claim 1, **characterised in that** the end of the ignition conductor (7) facing the spark plug (5) projects into a pick up (6) of the spark plug (5) and **in that** the ignition conductor (7) can be moved in an axial direction relative to the pick up.

5. Device according to claim 1, **characterised in that** a thermocouple (17) projects by a specifiable amount into the interior of the head piece (4).

## Revendications

1. Dispositif permettant d'amorcer la combustion dans une chambre de combustion d'une turbine à gaz avec un carter (2) présentant une pièce d'extrémité (3) et une pièce de tête (4), avec un circuit d'allumage (7) s'étendant entre la pièce d'extrémité et la pièce de tête, et une bougie d'allumage (5) disposée dans la pièce d'extrémité, avec une conduite de gaz (12) menant à une tête d'allumage (8) et avec une conduite d'amenée d'air menant dans l'enceinte intérieure du carter, moyennant quoi le circuit d'allumage (7) et la conduite de gaz (12) sont parallèles l'un à l'autre à l'intérieur du carter (2), et le circuit d'allumage (12) est entouré par une gaine de protection (9), **caractérisé en ce qu'**un espace annulaire (10) entre le circuit d'allumage et la gaine de protection est rempli de céramique pouvant être fixée par rapport au circuit d'allumage et / ou à la gaine de protection, et **en ce que**, au niveau de l'extrémité de la gaine de protection (9) dépassant dans la pièce de tête (4), on applique un disque annulaire (11) servant d'électrode d'allumage.

2. Dispositif selon la revendication 1, **caractérisé en ce que** la garniture en céramique est collée au circuit d'allumage (7) et / ou à la gaine de protection (9).

3. Dispositif selon la revendication 1, **caractérisé en ce que** la conduite de gaz (12) et la gaine de protection (9) présentent plusieurs éléments d'écartement configurés sous la forme de disques coulissants (15), **en ce qu'**au moins une partie des disques coulissants est raccordée fermement à la conduite de gaz et / ou la gaine de protection, **en ce que** la gaine de protection est également raccordée fermement à la tête d'allumage (8) et **en ce que** la tête d'allumage est configurée en pouvant être déplacée par rapport à la pièce de tête (4).

4. Dispositif selon la revendication 1, **caractérisé en ce que** l'extrémité tournée vers la bougie d'allumage (5) du circuit d'allumage (7) dépasse dans un élément de réception (6) de la bougie d'allumage (5), et **en ce que** le circuit d'allumage (7) peut se déplacer dans une direction axiale par rapport à l'élément de réception.

5. Dispositif selon la revendication 1, **caractérisé en ce qu'**un élément thermique dépasse d'une certaine distance pouvant être prédéfinie dans l'espace intérieur de la pièce de tête (4).
